# EUROPEAN PATENT SPECIFICATION

(11) **EP 3 032 179 B1**
(45) Date of publication and mention of the grant of the patent: **15.08.2018**
(21) Application number: 14838577.6
(22) Date of filing: 05.06.2014
(51) Int. Cl.: F24D 3/12, F24D 19/10, F25B 30/02, F25B 47/02, F25B 49/02

(54) **HOT WATER-TYPE HEATING DEVICE**
ERWÄRMUNGSVORRICHTUNG VOM HEISSWASSERTYP
DISPOSITIF DE CHAUFFAGE DE TYPE À EAU CHAUDE

(30) Priority: 23.08.2013 JP 2013173822
(43) Date of publication of application: 15.06.2016
(73) Proprietor: Toshiba Carrier Corporation, Kawasaki-shi, Kanagawa 212-8585 (JP)
(72) Inventor: AOKI, Kazuhito, Fuji-shi Shizuoka 416-8521 (JP); SUGIYAMA, Akiyoshi, Fuji-shi Shizuoka 416-8521 (JP); WARASHINA, Yoshitaka, Fuji-shi Shizuoka 416-8521 (JP)
(74) Representative: Rehmann, Thorsten
(86) International application number: PCT/JP2014/064960
(87) International publication number: WO 2015/025585

(56) References cited:
- EP-A1- 2 402 662
- EP-A1- 2 615 384
- EP-A2- 1 707 886
- JP-A- H11 173 636
- JP-A- 2000 186 819
- JP-A- 2004 286 412
- JP-A- 2012 159 255

## Description

### Technical Field

Embodiments described herein relate generally to a hot water heating apparatus which provides heating by using heat from hot water.

### Background Art

EP 2 615 384 A1 discloses a hot water heating apparatus according to the preamble of claim 1 of the invention.

There are hot water heating apparatuses configured to heat a room by supplying hot water obtained from the operation of a heat-pump refrigeration cycle to a heat radiator for room heating such as a fan coil, a radiator or a floor heating panel and using the heat from the heat radiator (for example, JP 2000-18671 A).

The coil, the radiator or the floor heating panel are selectively piped and connected according to a room heating method which the user chooses for an installation place.

A hot water heating apparatus of this type comprises a remote-control type operating unit (also called a remote controller) for setting operating conditions. The operating unit is installed on a wall or the like of a room to be heated and detects an indoor air temperature (atmospheric temperature) of the installation place.

The hot water heating apparatus compares a temperature detected by the remote controller and a temperature set to the remote controller and controls, based on the result of comparison, the operation of a compressor of the heat-pump refrigeration cycle by switching between an on state and an off state. For example, the operation of the compressor of the heat-pump refrigeration cycle is set to the on state (thermostatically switched to the on state) when the detected temperature is less than the set temperature, and the operation of the compressor is set to the off state (thermostatically switched to the off state) when the detected temperature reaches the set temperature.

### Disclosure of Invention

Floor heating panels laid on floor surfaces are surrounded by a number of heat dissipation elements such as floor materials and underfloor spaces. Therefore, in floor heating, it is disadvantageously likely that the temperature under the user's feet decreases more quickly than the temperature detected by the remote controller in the thermostat-instructed off state and consequently the user feels cold under his or her feet. For this reason, there is demand for a technique of operating a heating apparatus in such a manner that the user will not feel cold under his or her feet, thereby realizing comfortable heating.

A hot water heating apparatus of an embodiment which does not form part of the invention supplies hot water obtained from an operation of a heat-pump refrigeration cycle to a heat radiator for room heating, the hot water heating apparatus comprises; an indoor air temperature detector which detects an indoor air temperature; a first control section which controls an operation of a compressor of the heat-pump refrigeration cycle based on a comparison between a detected temperature of the indoor air temperature detector and a set temperature; and a second control section which sets the operation of the compressor, when the operation of the compressor is in an off state under the control of the first control section and if a temperature of hot water after passing through the heat radiator falls below a predetermined temperature, to an on state regardless of the control of the first control section.

### Brief Description of Drawings

FIG. 1 is a block diagram showing the structure of an embodiment.
FIG. 2 is a diagram showing the control conditions of an embodiment.
FIG. 3 is a flowchart showing the control of an embodiment.

### Best Mode for Carrying Out the Invention

Embodiments will be described below with reference to the accompanying drawings.

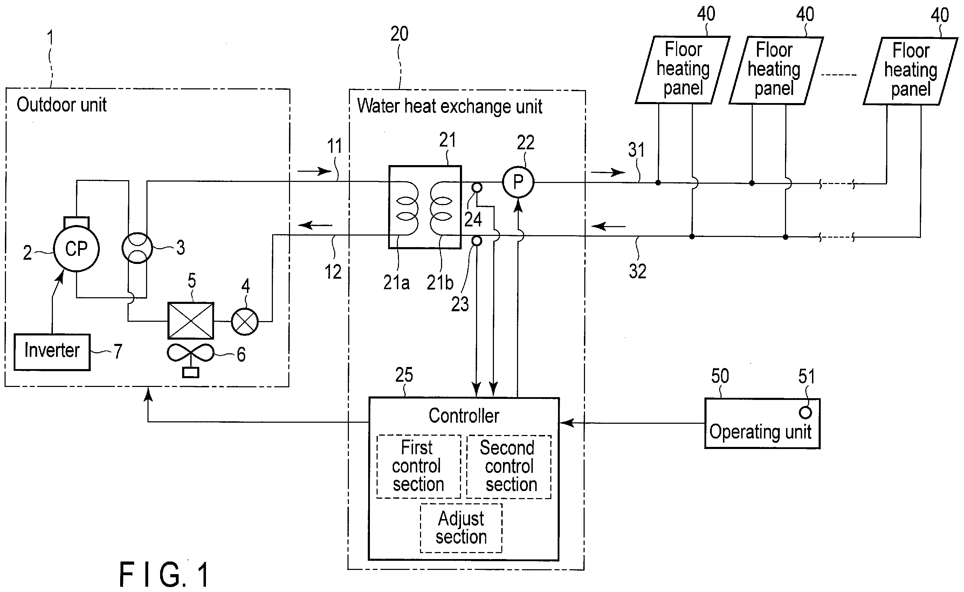

As shown in FIG. 1, heat source equipment, namely, an outdoor unit 1 comprises a compressor 2, a four-way valve 3, an expansion valve (decompression means) 4, an outdoor heat exchanger 5, an outdoor fan 6, and an inverter 7. The inverter 7 drives the compressor 2 at variable speed. To the outdoor unit 1, a water heat exchanger 21 of a water heat exchange unit 20 is connected via refrigerant pipes 11 and 12.

The compressor 2 takes in a refrigerant, compresses the refrigerant and then discharges the compressed refrigerant. The refrigerant discharge port of the compressor 2 connects to one end of a refrigerant flow channel 21a of the water heat exchanger 21 via the four-way valve 3 and the refrigerant pipe (the gas side) 11. The other end of the refrigerant flow channel 21a connects to one end of the outdoor heat exchanger 5 via the refrigerant pipe (the liquid side) 12 and the expansion valve 4, and the other end of the outdoor heat exchanger 5 is connected to the refrigerant suction port of the compressor 2 via the four-way valve 3. By piping and connecting in this manner, a heat-pump refrigeration cycle is formed.

That is, a gaseous refrigerant discharged from the compressor 2 flows to the refrigerant flow channel 21a of the water heat exchanger 21 through the four-way valve 3 and the refrigerant pipe 11. The gaseous refrigerant having flowed into the refrigerant flow channel 21a becomes condensed as losing heat to water flowing in a water flow channel 21b of the water heat exchange unit 20. The liquid refrigerant flowing out of the refrigerant flow channel 21a then flows into the outdoor heat exchanger 5 through the refrigerant pipe 12 and the expansion valve 4. The liquid refrigerant having flowed into the outdoor heat exchanger 5 then evaporates as drawing heat up from outside air. The gaseous refrigerant flowing out of the outdoor heat exchanger 5 is taken into the compressor 2 thorough the four-way valve 3. That is, the refrigerant flow channel 21a of the water heat exchanger 21 functions as a condenser, and the outdoor heat exchanger 5 functions as an evaporator.

The inverter 7 converts a voltage of a commercial alternating-current (AC) power supply into a direct-current (DC) voltage and outputs the DC voltage by further converting into an AC voltage of a predetermined frequency F by switching. Based on this output, the motor of the compressor 2 is driven at variable speed, and the (heating) performance of the refrigeration cycle is thereby changed.

The water heat exchange unit 20 further comprises a circulation pump 22, an incoming water temperature sensor 23, an outgoing water temperature sensor 24, and a controller 25 in addition to the water heat exchanger 21. The water heat exchanger 21 exchanges heat between the refrigerant which flows in the refrigerant flow channel 21a and the water which flows in the water flow channel 21b. To the water flow channel 21b of the water heat exchanger 21, a heat radiator for room heating, namely, a plurality of floor heating panels 40 are connected in parallel via water pipes 31 and 32. Each of the floor heating panels 40 is laid on the floor surface of a room and conducts heat of the hot water supplied from the water heat exchange unit 20 to the floor surface.

The circulation pump 22 is provided in water pipe 31 which connects to the outgoing water side of the water heat exchanger 21, and supplies water in water pipe 31 to the respective floor heating panels 40. That is, the circulation pump 22 circulates water between the water flow channel 21b of the water heat exchanger 21 and the respective floor heating panels 40. The incoming water temperature sensor 23 is attached intimately to a water pipe which connects the incoming water side of the water flow channel 21b and the water pipe 32 to each other, and detects a temperature Twi of the hot water having passed through the respective floor panels 40 and flowing into the water flow channel 21b. The outgoing water temperature sensor 24 is attached intimately to a water pipe which connects the outgoing water side of the water flow channel 21b of the water heat exchanger 21 and the circulation pump 22 to each other, and detects a temperature Two of the hot water having flowed out of the water flow channel 21b and flowing into the respective floor heating panels 40.

Note that the heat radiator for room heating also includes a fan coil for hot blast heating and a radiator for thermal radiation in addition to the floor heating panels 40. In the case of room heating by hot blast heating, one or more fan coils are connected to the water flow channel 21b of the water heat exchanger 21 via water pipes 31 and 32. In the case of room heating by thermal radiation, one or more radiators are connected to the water flow channel 21b of the water heat exchanger 21 via water pipes 31 and 32. It is also possible to connect to the water flow channel 21b of the water heat exchanger 21, one or more floor heating panels 40, one or more fan coils, and one or more radiators in a mixed manner.

To the controller 25 of the water heat exchange unit 20, the outdoor unit 1, the circulation pump 22, the incoming water temperature sensor 23, the outgoing water temperature sensor 24, and a remote control type operating unit (also called a remote controller) 50 are connected. The operating unit 50 is for setting operation conditions such as an operation mode, an indoor air temperature (set temperature Ts) and a start/stop state and installed on a wall of an air-conditioned room in which a heat radiator such as each of the floor heating panels 40 is installed. The operating unit 50 is provided with an indoor air temperature detector, namely, an indoor air temperature sensor 51. The indoor air temperature sensor 51 detects an atmospheric temperature of the air-conditioned room as an indoor air temperature Ta. The operating unit 50 transmits data of the set operation conditions, the detected indoor air temperature Ta and the like to the controller 25.

The controller 25 controls the respective devices of the outdoor unit 1 and the circulation pump 22 based on the data transmitted from the operating unit 50, the data of the detected temperature Twi of the incoming water temperature sensor 23, and the data of the detected temperature Two of the outgoing water temperature sensor 24.

In particular, the controller 25 comprises the following sections (1) to (3) as the main functions of a control program stored in an inner memory:
(1) a first control section which controls the operation of the compressor 2 by switching between an on state and an off state based on the result of comparison between the indoor air temperature Ta detected by the indoor air temperature sensor 51 and the set temperature Ts of the operating unit 50, and further controls, when the operation of the compressor 2 is in the on state under the above-described control, the performance of the compressor 2 (output frequency F of the inverter 7) to make the detected temperature Two of the outgoing temperature sensor 24 (temperature of the hot water supplied to the respective floor heating panels 40) approach a target temperature Tt (for example, 30°C) ;
(2) a adjusting section which adjusts the target temperature Tt based on a difference between the set temperature Ts and the indoor air temperature Ta; and
(3) a second control section in a case where a floor heating mode is set by the operating unit 50 to heat the floor surface by thermal radiation from the respective floor heating panels 40, the second control section which sets the operation of the compressor 2 to the on state regardless of the control of the first control section when the operation of the compressor 2 is in the off state (thermostat-instructed off state) under the control of the first control section and if the detected temperature Twi of the incoming water temperature sensor 23 (temperature of hot water which has decreased in the respective floor heating panels 40) falls below a predetermined temperature Twi1.

Note that the first control section of (1) exercises the control, more specifically, by setting a reference temperature Tsc (=Ts-ΔT0) based on the set temperature Ts of the operating unit 50 and further setting a first set temperature Tsc1 (=Tsc+ΔT1), an intermediate set temperature Tsc2 (=Tsc+ΔT2), and a second set temperature Tsc3 (=Tsc+ΔT3) (Tsc<Tsc1<Tsc2<Tsc3) based on the reference temperature Tsc. Further, in a state where the indoor air temperature Ta is increasing, the first control section sets the operation of the compressor 2 to the on state when the indoor air temperature Ta is less than the second set temperature Tsc3 and sets the operation of the compressor 2 to the off state when the indoor air temperature Ta is the second set temperature Tsc3 or greater. When the indoor air temperature Ta falls below the first set temperature Tsc1 after the operation is set to the off state, the first control section sets the operation of the compressor 2 to the on state.

The adjusting section of (2) adjusts the target temperature Tt when the operation of the compressor 2 is in the on state, more specifically, by adjusting the target temperature Tt upward by a certain amount at regular time interval if the indoor air temperature Ta is in a temperature region not reaching the reference temperature Tsc, maintaining the target temperature Tt as it is if the indoor air temperature Ta is in a temperature region beginning at the reference temperature Tsc but not reaching the first set temperature Tsc1, and adjusting the target temperature Tt downward by a certain amount at regular time interval if the indoor air temperature Ta is in a temperature region beginning at the first set temperature Tsc1 but not reaching the second set temperature Tsc3.

The above-described floor heating mode is set by an installation technician performing a special operation on the operating unit 50 when piping and connecting the respective floor heating panels 40 to the water heat exchange unit 20. The heating modes which can be set by the technician's operation include a hot blast heating mode using the fan coil as the heat radiator, a radiation heating mode using the radiators as the heat radiator and the like in addition to the floor heating mode.

Note that the second control section of (3) will not be operated in the modes other than the floor heating mode, that is, only the first control section of (1) and the adjusting section of (2) are operated in the modes other than the floor heating mode.

The predetermined temperature Twi1 in the second control section of (3) is a temperature approaching or equaling the set temperature Ts of the operating unit 50 and is set automatically by the controller 25. For example, if the set temperature Ts is 25°C, the controller 25 sets the same temperature, that is, 25°C as the predetermined temperature Twi1.

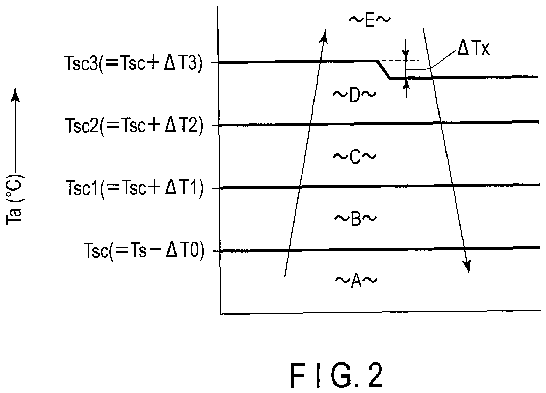

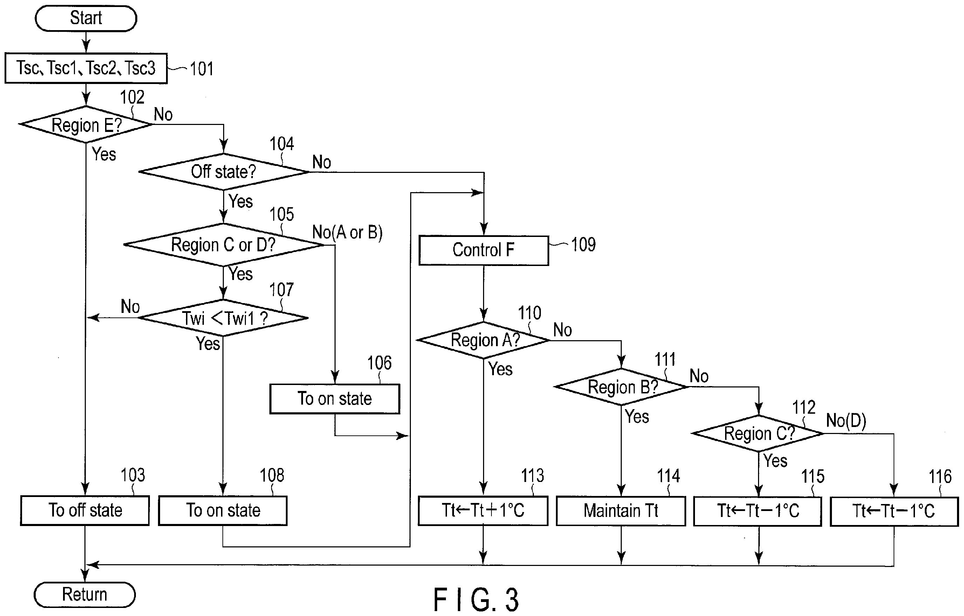

Next, the control which the controller 25 exercises in the floor heating mode will be described with reference to the control conditions of FIG. 2 and the flowchart of FIG. 3.

The controller 25 sets the reference temperature Tsc (=Ts-ΔT0) based on the set temperature Ts (for example, 25°C) of the operating unit 50 and further sets the first set temperature Tsc1 (=Tsc+ΔT1), the intermediate set temperature Tsc2 (=Tsc+ΔT2), and the second set temperature Tsc3 (=Tsc+ΔT3) based on the reference temperature Tsc (step 101). ΔT0, ΔT1, ΔT2 and ΔT3 are predetermined temperatures stored in the internal memory of the controller 25 in advance. For example, ΔT0=0.5°C, ΔT1=0.5°C, ΔT2=1.5°C and ΔT3=2.5°C. When these predetermined temperatures are as described above, the following condition: Tsc<Tsc1<Tsc2<Tsc3 is satisfied.

Based on the reference temperature Tsc (=Ts-ΔT0), the first set temperature Tsc1 (=Tsc+ΔT1), the intermediate set temperature Tsc2 (=Ts+ΔT2) and the second set temperature Tsc3 (=Tsc+ΔT3), five temperature control regions A, B, C, D and E shown in FIG. 2 are set. Temperature control region A is a temperature region not reaching the reference temperature Tsc. Temperature control region B is a temperature region beginning at the reference temperature Tsc but not reaching the first set temperature Tsc1. Temperature control region C is a temperature region beginning at the first set temperature Tsc1 but not reaching the intermediate set temperature Tsc2. Temperature control region D is a temperature region beginning at the intermediate set temperature Tsc2 but not reaching the second set temperature Tsc3. Temperature control region E is a temperature region beginning at the second set temperature Tsc3. Note that a temperature width ΔTx (for example, 0.5°C) extending across temperature control regions D and E is a hysteresis region for preventing an improper operation caused by chattering.

Subsequent to the processing of step 101, the controller 25 determines whether the indoor air temperature Ta is in temperature control region E or not (step 102). If the indoor air temperature Ta is in temperature control region E (YES in step 102), the controller 25 thermostatically switches the compressor 2 to the off state (operation off mode) (step 103).

If the indoor air temperature Ta is not in temperature control region E (NO in step 102), the controller 25 determines whether the compressor 2 is in the thermostat-instructed off state (step 104). If the compressor 2 is in the thermostat-instructed off state (YES in step 104), the controller 25 determines whether the indoor air temperature Ta is in either one of temperature control regions C and D (step 105). If the indoor air temperature Ta is not in either one of temperature control regions C and D (NO in step 105), that is, if the indoor air temperature Ta is in either one of temperature control regions A and B, the controller 25 thermostatically switches the compressor 2 to the on state (operation on mode) (step 106). This thermostatic control to set to the on state includes setting the operation of the circulation pump 22 to an on state.

By setting to the on state under thermostatic control, hot water is supplied from the water heat exchange unit 20 to the respective floor heating panels 40. The floor heating starts by the hot water supply.

The controller 25 controls, as setting to the on state under thermostatic control, the output frequency F of the inverter 7 to make the detected temperature Two of the outgoing water temperature sensor 24 (temperature of the hot water supplied to the floor heating panels 40) approach the target temperature Tt (step 109). More specifically, if the detected temperature Two is less than the target temperature Tt and a difference therebetween is great, the controller 25 sets the output frequency F of the inverter 7 to a relatively high value. By this setting, the performance of the compressor 2 increases. As the detected temperature Two approaches the target temperature Tt and the difference therebetween thereby becomes smaller, the controller 25 gradually decreases the output frequency F of the inverter 7. As the output frequency F decreases, the performance of the compressor 2 decreases accordingly. In this way, the performance of the compressor 2 is controlled to supply hot water of an appropriate temperature to the respective floor heating panels 40. Note that a change in the temperature of the hot water occurs in a certain time (with a time lag). Therefore, it is preferable that the control to increase or decrease the output frequency F of the inverter 7 be exercised not frequently but at an interval of, for example, three minutes.

Then, the controller 25 determines which one of temperature control regions A, B, C and D the indoor air temperature Ta is in (steps 110, 111 and 112).

If the indoor air temperature Ta is in temperature control region A (YES in step 110), the indoor air temperature Ta is considerably less than the set temperature Ts, and thus it is necessary to increase the performance of the floor heating. Therefore, the controller 25 adjusts the target temperature Tt upward by a certain amount (1K) at regular intervals (every 30 minutes) (step 113). The controller 25 then repeats the processing from step 101. In this case, the indoor air temperature Ta is not in temperature control region E (NO in step 102) and the compressor 2 is in the thermostat-instructed on state (NO in step 104), and therefore the controller 25 controls the output frequency F of the inverter 7 to make the detected temperature Two of the outgoing water temperature sensor 24 approach the target temperature Tt (step 109). That is, since the target temperature Tt has been adjusted upward in step 113, the controller 25 increases the output frequency F of the inverter 7, thereby increasing the performance of the compressor 2. As the performance of the compressor 2 increases, the power of heating the hot water increases, and the floor heating performance increases accordingly. In this way, the indoor air temperature Ta rapidly increases toward the set temperature Ts.

Then, the controller 25 determines which one of temperature control regions A, B, C and D the indoor air temperature Ta is in (steps 110, 111 and 112).

If the indoor air temperature Ta has increased and entered temperature control region B (NO in step 110, YES in step 111), the indoor air temperature Ta has approached the set temperature Ts, and therefore it is no longer necessary to increase the floor heating performance. Therefore, the controller 25 maintains the current target temperature Tt as it is (step 114). The controller 25 then repeats the processing from step 101. In this case, the indoor air temperature Ta is not in temperature control region E (NO in step 102) and the compressor 2 is in the thermostat-instructed on state (NO in step 104), and therefore the controller 25 controls the output frequency F of the inverter 7 to make the detected temperature Two of the outgoing water temperature sensor 24 approach the target temperature Tt (step 109). That is, since the target temperature Tt has been maintained in step 114, the controller 25 controls the output frequency F of the inverter 7 in such a manner as to obtain the same heating performance as that of a case where the indoor air temperature Ta is in temperature control region A. By this control, the indoor air temperature Ta rapidly increases toward the set temperature Ts.

Then, the controller 25 determines which one of temperature control regions A, B, C and D the indoor air temperature Ta is in (steps 110, 111 and 112).

If the indoor air temperature Ta has increased and entered temperature control region C (NO in step 110, NO in step 111, YES in step 112), the indoor air temperature Ta has reached the set temperature Ts, and thus it is necessary to decrease the floor heating performance. Therefore, the controller 25 adjusts the target temperature Tt downward by a certain amount (1K) at regular intervals (every 30 minutes) (step 115). The controller 25 then repeats the processing from step 101. In this case, the indoor air temperature Ta is not in temperature control region E (NO in step 102) and the compressor 2 is in the thermostat-instructed on state (NO in step 104), and therefore the controller 25 controls the output frequency F of the inverter 7 to make the detected temperature Two of the outgoing water temperature sensor 24 approach the target temperature Tt (step 109). That is, since the target temperature Tt has been adjusted downward in step 115, the controller 25 decreases the output frequency F of the inverter 7, thereby decreasing the performance of the compressor 2. As the performance of the compressor 2 decreases, the power for heating the hot water decreases, and the floor heating performance decreases accordingly. In this way, an increase in the indoor air temperature Ta is prevented.

Then, the controller 25 determines which one of temperature control regions A, B, C and D the indoor air temperature Ta is in (steps 110, 111 and 112).

If the indoor air temperature Ta has increased and entered temperature control region D despite the decrease in the floor heating performance in temperature control region C (NO in step 110, NO in step 111, NO in step 112), it is necessary to continue reducing the floor heating performance. Therefore, the controller 25 adjusts the target temperature Tt downward by a certain amount (1K) at regular intervals (every 30 minutes) in a manner similar to that of the control in temperature control region C (step 116). The controller 25 then repeats the processing from step 101. In this case, the indoor air temperature Ta is not in temperature control region E (NO in step 102) and the compressor 2 is in the thermostat-instructed on state (NO in step 104), the controller 25 controls the output frequency F of the inverter 7 to make the detected temperature Two of the outgoing water temperature sensor 24 approach the target temperature Tt (step 109). That is, since the target temperature Tt has been adjusted downward in step 116, the controller 25 decreases the output frequency F of the inverter 7, thereby decreasing the performance of the compressor 2. As the performance of the compressor 2 decreases, the power for heating the hot water decreases, and the floor heating performance decreases accordingly. In this way, an increase in the indoor air temperature Ta is further prevented.

Note that, in adjusting the target temperature Tt downward in temperature control regions C and D, it is preferable to make appropriate changes to the adjustment time interval and the adjustment amount. Further, in adjusting the target temperature Tt when the indoor air temperature Ta is in the higher temperature control region, namely, temperature control region D, it is desirable that one or both of the adjustment time interval and the adjustment amount be different from those of temperature control region C in light of the case of controlling a room temperature. That is, the adjustment time interval of temperature control region D is set to be shorter than the adjustment time interval of temperature control region C. Alternatively, the adjustment amount of temperature control region D is set to be greater than the adjustment amount of temperature control region C.

If the indoor air temperature Ta has increased and entered temperature control region E despite the decrease in the floor heating performance in temperature control region D (YES in step 102), this is regarded as an overheating condition where the indoor air temperature Ta has increased excessively with respect to the set temperature Ts. Therefore, the controller 25 sets the compressor 2 to the thermostat-instructed off state (operation off mode) (step 103). By setting to the off state under thermostatic control, the floor heating stops. The controller 25 then repeats the processing from step 101. Note that the controller 25 continues circulation of hot water by operating the circulation pump 22 even during the thermostat-instructed off state. By continuing circulation of hot water, it is possible to prevent water pipes 31 and 32 from being frozen.

If the indoor air temperature Ta has entered the temperature region below temperature control region E by setting to the off state under thermostatic control (NO in step 102), the controller 25 determines whether, since the compressor is in the thermostat-instructed off state (YES in step 1014), the indoor air temperature Ta is now in either one of temperature control regions C and D (step 105). While the indoor air temperature Ta stays in either one of temperature control regions C and D without decreasing to temperature control region A or B during the thermostat-instructed off state of the compressor (YES in step 105), the controller 25 compares the detected temperature Twi of the incoming water temperature sensor 23 and the predetermined temperature Twi1 (step 106). Note that a temperature substantially equaling the set temperature Ts is set as the predetermined temperature Twi1. If the detected temperature Twi of the incoming water temperature sensor 23 is greater than or equal to the predetermined temperature Twi1 (NO in step 107), the controller 25 continues the thermostat-instructed off state of the compressor (step 103). The controller 25 then repeats the processing from step 101.

If it is determined in step 105 that the indoor air temperature Ta has decreased to temperature control region B or temperature control region A (YES in step 105), the controller 25 thermostatically switches the compressor 2 to the on state (step 106). By setting to the on state under thermostatic control, the floor heating starts (is resumed). Subsequently, the processing moves to step 109, and the controller 25 controls the operation frequency F of the compressor 2. In this way, the floor heating panels 40 are supplied with hot water and perform floor heating by using the heat from the hot water. That is, since the indoor air temperature Ta has decreased, the floor heating is resumed.

On the other hand, if it is determined in step 107 that the detected temperature Twi of the incoming water temperature sensor 23 is less than the predetermined temperature Twi1 (YES in step 107), the controller 25 forcibly sets the compressor 2 to the on state under thermostatic control regardless of a difference between the indoor air temperature Ta and the set temperature Tsc (step 108). By setting to the on state under thermostatic control, the floor heating is resumed. Subsequently, the processing moves to step 109, and the controller 25 controls the operation frequency F of the compressor 2. In this way, the floor heating panels 40 are supplied with hot water and perform floor heating by using the heat from the hot water.

The detected temperature Twi of the incoming water temperature sensor 23 is a temperature of the hot water having passed through the floor heating panels 40 and returning to the water heat exchange unit 20. If the returning hot water has a temperature less than the predetermined temperature Twi1, the compressor is forcibly set to the on state under thermostatic control regardless of a difference between the indoor air temperature Ta detected by the indoor air temperature sensor 51 of the operating unit 50 and the set temperature Tsc to prevent a decrease in the temperature on and around the floor surface.

Since the indoor air temperature Ta detected by the indoor air temperature sensor 51 of the operating unit 50 is an atmospheric temperature at a height above the floor surface and there are a number of heat dissipation elements such as floor materials and underfloor spaces around the floor heating panels 40 laid on the floor surface, the room temperature at the user's feet decreases more quickly than the indoor air temperature Ta detected by the indoor air temperature sensor 51 of the operating unit 50 during the thermostat-instructed off state. Conventionally, the temperature continuously decreases to the extent that the user feels cold under his or her feet. However, according to the control of the present embodiment, since the compressor is forcibly set to the on state under thermostatic control by detecting a decrease in the detected temperature Twi of the incoming water temperature sensor 23 beforehand, the above-described issue of coldness can be resolved. As a result, it is possible to operate a hot water heating apparatus in such a manner that the user will not feel cold under his or her feet, thereby realizing comfortable floor heating.

### [Modification]

Although a temperature less than the set temperature Ts has been set as the reference temperature Tsc in the above-described embodiment, it is possible to set the set temperature Ts directly as the reference temperature Tsc. It is also possible to set a temperature greater than the set temperature Ts as the reference temperature Tsc.

The constants ΔT1, ΔT2 and ΔT3 which respectively determine the set temperatures Tsc+ΔT1, Tsc+ΔT2 and Tsc+ΔT3 are not limited to the temperatures described in the embodiment and may be determined appropriately based on the environment of the installation place of the floor heating panels 40, the lengths of water pines 31 and 32 and the like.

### Industrial Applicability

The hot water heating apparatus of an embodiment is applicable to a house adopting floor heating.

## Claims

1. A hot water heating apparatus comprising a heat-pump refrigeration cycle including a compressor and a heat radiator (40) for room heating, wherein the hot water heating apparatus supplies hot water obtained from an operation of the heat-pump and comprising:
a water heat exchanger (21) including a refrigerant flow channel (21a) and a water flow channel (21b), the refrigerant flow channel (21a) being contained in the heat-pump refrigeration cycle;
a circulation pump (22) configured to circulate water between the water flow channel (21b) of the water heat exchanger (21) and the heat radiator (40);
an incoming water temperature sensor (23) configured to detect a temperature (Twi) of the hot water having passed through the heat radiator (40) and returned to the water flow channel (21b) of the water heat exchanger (21);
an indoor air temperature detector (51) which detects an indoor air temperature (Ta); and
a first control section configured to control an operation of a compressor (2) of the heat-pump refrigeration cycle by comparing the detected temperature (Ta) of the indoor air temperature detector (51) and a set temperature (Ts);
**characterized by**
a second control section configured to set the operation of the compressor (2), when the operation of the compressor (2) is in an off state under the control of the first control section and if the detected temperature (Twi) of the incoming water temperature sensor (23) falls below a predetermined temperature (Twi1), to an on state regardless of the control of the first control section.

2. The hot water heating apparatus of Claim 1, **characterized by** further comprising
an operating unit (50) which is installable in an air-conditioned room provided with the heat radiator (40) and configured to set operation conditions including the set temperature (Ts), and **characterized in that**
the indoor air temperature detector (51) is provided in the operating unit (50) and configured to detect an atmospheric temperature of the air-conditioned room provided with the heat radiator (40) as the indoor air temperature (Ta).

3. The hot water heating apparatus of Claim 1, **characterized by** further comprising
an outgoing water temperature sensor (24) configured to detect_a temperature (Two) of the hot water supplied to the heat radiator (40), and in that
the first control section is configured to control performance of the compressor (2) to make the detected temperature (Two) of the outgoing water temperature sensor (24) approach a target temperature (Tt) when the operation of the compressor (2) is in the on state.

4. The hot water heating apparatus of Claim 3, **characterized by** further comprising
an adjusting section configured to adjust the target temperature (Tt) based on a difference between the set temperature (Tt) and the detected temperature (Ta) of the indoor air temperature detector (51).

5. The hot water heating apparatus of Claim 1, **characterized in that**
the first control section is configured to set a first set temperature (Tsc1) and a second set temperature (Tsc3) which is greater than the first set temperature (Tsc1) based on the set temperature (Ts), configured to set the operation of the compressor (2) to the on state when the detected temperature (Ta) of the indoor air temperature detector (51) is less than the second set temperature (Tsc3), configured to set the operation of the compressor (2) to the off state when the detected temperature (Ta) of the indoor air temperature detector (51) is greater than or equal to the second set temperature (Tsc3), and configured to set the operation of the compressor (2) to the on state when the detected temperature (Ta) of the indoor air temperature detector (51) falls below the first set temperature (Tsc1) after the operation of the compressor (2) is set to the off state.

6. The hot water heating apparatus of Claim 5, **characterized by** further comprising
an outgoing water temperature sensor (24) configured to detect a temperature (Two) of the hot water supplied to the heat radiator (40), and **characterized in that**
the first control section is configured to control performance of the compressor (2) to make the detected temperature (Two) of the outgoing water temperature sensor (24) approach a target temperature (Tt) when the operation of the compressor (2) is in the on state.

7. The hot water heating apparatus of Claim 6, **characterized by** further comprising
an adjusting section configured to adjust the target temperature (Tt) based on a difference between the set temperature (Ts) and the detected temperature (Ta) of the indoor air temperature detector (51).

8. The hot water heating apparatus of Claim 1, **characterized in that**
the first control section is configured to set a reference temperature (Tsc)_which is the difference between the set temperature (Ts) and a first predetermined temperature (ΔT0) based on the set temperature (Ts), configured to set a first set temperature (Tsc1) which is the sum of the reference temperature (Tsc) and a second predetermined temperature (ΔT1), and a second set temperature (Tsc3) which is the sum of the reference temperature (Tsc) and a third predetermined temperature (ΔT3), whereby the first set temperature (Tsc1) is smaller than the second set temperature (Tsc3) based on the reference temperature (Tsc), configured to set the operation of the compressor (2) to the on state when the detected temperature (Ta) of the indoor air temperature detector (51) is less than the second set temperature (Tsc3), configured to set the operation of the compressor (2) to the off state when the detected temperature (Ta) of the indoor air temperature detector (51) is greater than or equal to the second set temperature (Tsc3), and configured to set the operation of the compressor (2) to the on state when the detected temperature (Ta) of the indoor air temperature detector (51) falls below the first set temperature (Tsc1) after the operation of the compressor (2) is set to the off state.

9. The hot water heating apparatus of Claim 8, **characterized by** further comprising
an outgoing water temperature sensor (24) configured to detect a temperature (Two) of the hot water supplied to the heat radiator (40), and **characterized in that**
the first control section is configured to control performance of the compressor (2) to make the detected temperature (Two) of the outgoing water temperature sensor (24) approach a target temperature (Tt) when the operation of the compressor (2) is in the on state.

10. The hot water heating apparatus of Claim 9, **characterized by** further comprising
an adjusting section configured to adjust the target temperature (Tt) based on a difference between the set temperature (Ts) and the detected temperature (Ta) of the indoor air temperature detector (51).

11. The hot water heating apparatus of Claim 10, **characterized in that**
the adjusting section is configured to adjust the target temperature (Tt) upward by a certain amount at regular time intervals when the operation of the compressor (2) is in the on state and if the detected temperature (Ta) of the indoor air temperature detector (51) is less than the reference temperature (Tsc), configured to maintain the target temperature (Tt) when the operation of the compressor (2) is in the on state and if the detected temperature (Ta) of the indoor air temperature detector (51) is in a temperature region beginning at the reference temperature (Tsc) but not reaching the first set temperature (Tsc1), and configured to adjust the target temperature (Tt) downward by a certain amount at regular time intervals when the operation of the compressor (2) is in the on state and if the detected temperature (Ta) of the indoor air temperature detector (51) is in a temperature region beginning at the first set temperature (Tsc1) but not reaching the second set temperature (Tsc3).

12. The hot water heating apparatus of Claim 1, **characterized in that**
the heat-pump refrigeration cycle comprises the compressor (2), a four-way valve (3), the refrigerant flow channel (21a) of the water heat exchanger (21), an expansion valve (4) and an outdoor heat exchanger (5), flows a refrigerant discharged from the compressor (2) to the refrigerant flow channel (21a) of the water heat changer (21) through the four-way valve (3), flows the refrigerant after passing through the refrigerant flow channel (21a) to the outdoor heat exchanger (5) through the expansion valve (4) and the four-way valve (3), and returns the refrigerant after passing through the outdoor heat exchanger (5) to the compressor (2).

## Patentansprüche

1. Warmwasser-Heizvorrichtung mit einem Kältekreislauf einer Wärmepumpe umfassend einen Kompressor und einen Heizkörper (40) zum Erwärmen eines Raumes, wobei die Warmwasser-Heizvorrichtung von einem Betrieb der Wärmepumpe bezogenes Warmwasser bereitstellt und aufweist:
einen Wasserwärmetauscher (21) mit einem Kältemittelflusskanal (21a) und einem Wasserflusskanal (21b), wobei der Kältemittelflusskanal (21a) in den Kältekreislauf der Wärmepumpe eingebunden ist;
einer Zirkulationspumpe (22), die eingerichtet ist, Wasser zwischen dem Wasserflusskanal (21b) des Wasserwärmetauschers (21) und dem Heizkörper (40) zu zirkulieren;
einem Temperatursensor für zuströmendes Wasser (23), der dazu eingerichtet ist, eine Temperatur (Twi) des Warmwassers, das durch den Heizkörper (40) und zu dem Wasserflusskanal (21b) des Wasserwärmetauschers (21) zurück geströmt ist, zu ermitteln;
einem Detektor der Innenlufttemperatur (51), der eine Innenlufttemperatur (Ta) ermittelt;
einem ersten Steuerabschnitt, der dazu eingerichtet ist, einen Betrieb des Kompressors (2) des Kältekreislaufs der Wärmepumpe durch Vergleichen der von dem Detektor der Innenlufttemperatur (51) ermittelten Temperatur (Ta) mit einer Sollwerttemperatur (Ts) zu steuern;
**gekennzeichnet durch**
einen zweiten Steuerabschnitt, der dazu eingerichtet ist, den Kompressor (2) ohne Rücksicht auf die Steuerung des ersten Steuerabschnittes einzuschalten, wenn der Kompressor (2) unter der Steuerung des ersten Steuerabschnittes ausgeschaltet ist und wenn die von dem Temperatursensor für zuströmendes Wasser (23) ermittelte Temperatur (Twi) unterhalb eine festgelegte Temperatur (Twi1) fällt.

2. Warmwasser-Heizvorrichtung nach Anspruch 1, **gekennzeichnet durch**
eine Betriebseinheit (50), die in einem klimatisierten und mit dem Heizkörper (40) ausgestatteten Raum installierbar ist und dazu eingerichtet ist, Betriebsbedingungen, die auch die Sollwerttemperatur (Ts) umfassen, einzustellen, und **dadurch gekennzeichnet, dass**
der Detektor der Innenlufttemperatur (51) in der Betriebseinheit (50) angeordnet ist und dazu eingerichtet ist, eine Atmosphärentemperatur des klimatisierten und mit dem Heizkörper (40) ausgestatteten Raums als die Innenlufttemperatur (Ta) zu ermitteln.

3. Warmwasser-Heizvorrichtung nach Anspruch 1, **gekennzeichnet durch**
einen Temperatursensor für ausströmendes Wasser (24), der dazu eingerichtet ist, eine Temperatur (Two) des dem Heizkörper (40) bereitgestellten Warmwassers zu ermitteln, und dass
der erste Steuerabschnitt dazu eingerichtet ist, die Leistung des Kompressors (2) zu steuern, um die von dem Temperatursensor des ausströmenden Wassers (24) ermittelte Temperatur (Two) sich einer Zieltemperatur (Tt) annähern zu lassen, wenn der Kompressor (2) eingeschaltet ist.

4. Warmwasser-Heizvorrichtung nach Anspruch 3, **gekennzeichnet durch**
einen Einstellabschnitt, der dazu eingerichtet ist, die Zieltemperatur (Tt) auf Basis eines Unterschiedes zwischen der Sollwerttemperatur (Tt) und der von dem Detektor der Innenlufttemperatur (51) ermittelten Temperatur (Ta) einzustellen.

5. Warmwasser-Heizvorrichtung nach Anspruch 1, **dadurch gekennzeichnet, dass**
der erste Steuerabschnitt dazu eingerichtet ist, eine erste Sollwerttemperatur (Tsc1) und eine zweite Sollwerttemperatur (Tsc3), die größer als die auf der Sollwerttemperatur (Ts) basierende erste Sollwerttemperatur (Tsc1) ist, festzulegen,
dazu eingerichtet ist, den Kompressor (2) einzuschalten, wenn die von dem Detektor der Innenlufttemperatur (51) ermittelte Temperatur (Ta) kleiner als die zweite Sollwerttemperatur (Tsc3) ist,
dazu eingerichtet ist, den Kompressor (2) auszuschalten, wenn die von dem Detektor der Innenlufttemperatur (51) ermittelte Temperatur (Ta) größer oder gleich der zweiten Sollwerttemperatur (Tsc3) ist,
und dazu eingerichtet ist, den Kompressor (2) einzuschalten, wenn die von dem Detektor der Innenlufttemperatur (51) ermittelte Temperatur (Ta) unterhalb die erste Sollwerttemperatur (Tsc1) fällt, nach dem der Kompressor (2) ausgeschaltet wurde.

6. Warmwasser-Heizvorrichtung nach Anspruch 5, **gekennzeichnet durch**
einen Temperatursensor für ausströmendes Wasser (24), der dazu eingerichtet ist, eine Temperatur (Two) des dem Heizkörper (40) bereitgestellten Warmwassers zu ermitteln, und **dadurch gekennzeichnet, dass**
der erste Steuerabschnitt dazu eingerichtet ist, die Leistung des Kompressors (2) zu steuern, um die von dem Temperatursensor des ausströmenden Wassers (24) ermittelte Temperatur (Two) sich einer Zieltemperatur (Tt) annähern zu lassen, wenn der Kompressor (2) eingeschaltet ist.

7. Warmwasser-Heizvorrichtung nach Anspruch 6, **gekennzeichnet durch**
einen Einstellabschnitt, der dazu eingerichtet ist, die Zieltemperatur (Tt) auf Basis eines Unterschiedes zwischen der Sollwerttemperatur (Ts) und der von dem Detektor der Innenlufttemperatur (51) ermittelten Temperatur (Ta) einzustellen.

8. Warmwasser-Heizvorrichtung nach Anspruch 1, **dadurch gekennzeichnet, dass** der erste Steuerabschnitt dazu eingerichtet ist, eine Referenztemperatur (Tsc), die die Differenz zwischen der Sollwerttemperatur (Ts) und einer ersten festgelegten Temperatur (ΔT0), die auf der Sollwerttemperatur (Ts) basiert, ist, festzulegen,
dazu eingerichtet ist, eine erste Sollwerttemperatur (Tsc1), die die Summe der Referenztemperatur (Tsc) und einer zweiten festgelegten Temperatur (ΔT1) ist, und eine zweite Sollwerttemperatur (Tsc3), die die Summe der Referenztemperatur (Tsc) und einer dritten festgelegten Temperatur (ΔT3) ist, festzulegen,
wobei die ersten Sollwerttemperatur (Tsc1) kleiner als die zweite Sollwerttemperatur (Tsc3), die auf der Referenztemperatur (Tsc) basiert, ist,
dazu eingerichtet ist, den Kompressor (2) einzuschalten, wenn die von dem Detektor der Innenlufttemperatur (51) ermittelte Temperatur (Ta) kleiner als die zweite Sollwerttemperatur (Tsc3) ist,
dazu eingerichtet ist, den Kompressor (2) auszuschalten, wenn die von dem Detektor der Innenlufttemperatur (51) ermittelte Temperatur (Ta) größer oder gleich der zweiten Sollwerttemperatur (Tsc3) ist,
und dazu eingerichtet ist, den Kompressor (2) einzuschalten, wenn die von dem Detektor der Innenlufttemperatur (51) ermittelte Temperatur (Ta) unterhalb die erste Sollwerttemperatur (Tsc1) fällt, nach dem der Kompressor (2) ausgeschaltet wurde.

9. Warmwasser-Heizvorrichtung nach Anspruch 8, **gekennzeichnet durch**
einen Temperatursensor für ausströmendes Wasser (24), der dazu eingerichtet ist, eine Temperatur (Two) des dem Heizkörper (40) bereitgestellten Warmwassers zu ermitteln, und **dadurch gekennzeichnet, dass**
der erste Steuerabschnitt dazu eingerichtet ist, die Leistung des Kompressors (2) zu steuern, um die von dem Temperatursensor des ausströmenden Wassers (24) ermittelte Temperatur (Two) sich einer Zieltemperatur (Tt) annähern zu lassen, wenn der Kompressor (2) eingeschaltet ist.

10. Warmwasser-Heizvorrichtung nach Anspruch 9, **gekennzeichnet durch**
einen Einstellabschnitt, der dazu eingerichtet ist, die Zieltemperatur (Tt) auf Basis eines Unterschiedes zwischen der Sollwerttemperatur (Ts) und der von dem Detektor der Innenlufttemperatur (51) ermittelten Temperatur (Ta) einzustellen.

11. Warmwasser-Heizvorrichtung nach Anspruch 10, **dadurch gekennzeichnet, dass**
der Einstellabschnitt dazu eingerichtet ist, die Zieltemperatur (Tt) in einem bestimmten Maße in regelmäßigen Zeitintervallen nach oben anzupassen, wenn der Kompressor (2) eingeschaltet ist und sofern die von dem Detektor der Innenlufttemperatur (51) ermittelte Temperatur (Ta) geringer als die Referenztemperatur (Tsc) ist,
dazu eingerichtet ist, die Zieltemperatur (Tt) beizubehalten, wenn der Kompressor (2) eingeschaltet ist und sich in einer Temperaturregion beginnend bei der Referenztemperatur (Tsc) aber nicht erreichend die erste Sollwerttemperatur (Tsc1) befindet,
und dazu eingerichtet ist, die Zieltemperatur (Tt) in einem bestimmten Maße in regelmäßigen Zeitintervallen nach unten anzupassen, wenn der Kompressor (2) eingeschaltet ist und sofern die von dem Detektor der Innenlufttemperatur (51) ermittelte Temperatur (Ta) sich in einer Temperaturregion beginnend bei der ersten Sollwerttemperatur (Tsc1) aber nicht erreichend die zweite Sollwerttemperatur (Tsc3) befindet.

12. Warmwasser-Heizvorrichtung nach Anspruch 1, **dadurch gekennzeichnet, dass**
der Kältekreislauf der Wärmepumpe aufweist den Kompressor (2), ein Vier-Wege-Ventil (3), den Kältemittelflusskanal (21a) des Wasserwärmetauschers (21), ein Expansionsventil (4) und einen Außenwärmetauscher (5), fließt ein aus dem Kompressor (2) abgelassenes Kältemittel zu dem Kältemittelflusskanal (21a) des Wasserwärmetauschers (21) durch das Vier-Wege-Ventil (3), fließt das Kältemittel nach dem Verlaufen durch den Kältemittelflusskanal (21a) zu dem Außenwärmetauscher (5) durch das Expansionsventil (4) und das Vier-Wege-Ventil (3), und kehrt das Kühlmittel nach dem Verlaufen durch den Außenwärmetauscher (5) zu dem Kompressor (2) zurück.

## Revendications

1. Appareil de chauffage d'eau chaude comprenant un cycle de réfrigération de pompe à chaleur comprenant un compresseur et un radiateur chauffant (40) pour le chauffage d'une pièce, l'appareil de chauffage d'eau chaude fournissant de l'eau chaude obtenue à partir d'un fonctionnement de la pompe à chaleur et comprenant :
un échangeur de chaleur d'eau (21) comprenant un canal d'écoulement de réfrigérant (21a) et un canal d'écoulement d'eau (21b), le canal d'écoulement de réfrigérant (21a) étant contenu dans le cycle de réfrigération de pompe à chaleur ;
une pompe à circulation (22) configurée pour faire circuler de l'eau entre le canal d'écoulement d'eau (21b) de l'échangeur de chaleur d'eau (21) et le radiateur chauffant (40) ;
un capteur de température d'eau d'entrée (23) configuré pour détecter une température (Twi) de l'eau chaude ayant traversé le radiateur chauffant (40) et retournée vers le canal d'écoulement d'eau (21b) de l'échangeur de chaleur d'eau (21) ;
un détecteur de température d'air d'entrée (51) qui détecte une température d'air intérieur (Ta) ; et
une première section de commande configurée pour commander un fonctionnement d'un compresseur (2) du cycle de réfrigération de pompe à chaleur par comparaison de la température détectée (Ta) du détecteur de température d'air intérieur (51) et d'une température de consigne (Ts) ; **caractérisé par**
une deuxième section de commande configurée pour définir le fonctionnement du compresseur (2), lorsque le fonctionnement du compresseur (2) est dans un état d'arrêt sous le contrôle de la première section de commande et si la température détectée (Twi) du capteur de température d'eau d'entrée (23) diminue au-dessous d'une température prédéterminée (Twi1), dans un état de marche indépendamment de la commande de la première section de commande.

2. Appareil de chauffage d'eau chaude selon la revendication 1, **caractérisé en ce qu'**il comprend en outre
une unité opérationnelle (50) qui peut être installée dans une pièce climatisée pourvue du radiateur chauffant (40) et configurée pour définir des conditions de fonctionnement comprenant la température de consigne (Ts), et **caractérisé en ce que**
le détecteur de température d'air intérieur (51) est disposé dans l'unité opérationnelle (50) et configuré pour détecter une température atmosphérique de la pièce climatisée pourvue du radiateur chauffant (40) en tant que température d'air intérieur (Ta).

3. Appareil de chauffage d'eau chaude selon la revendication 1, **caractérisé en ce qu'**il comprend en outre
un capteur de température d'eau de sortie (24) configuré pour détecter une température (Two) de l'eau chaude distribuée dans le radiateur chauffant (40), et **en ce que**
la première section de commande est configurée pour commander le fonctionnement du compresseur (2) de façon à amener la température détectée (Two) du capteur de température d'eau de sortie (24) à s'approcher d'une température cible (Tt) lorsque le fonctionnement du compresseur (2) est dans l'état de marche.

4. Appareil de chauffage d'eau chaude selon la revendication 3, **caractérisé en ce qu'**il comprend en outre
une section de réglage configurée pour régler la température cible (Tt) sur la base d'une différence entre la température de consigne (Tt) et la température détectée (Ta) du détecteur de température d'air intérieur (51).

5. Appareil de chauffage d'eau chaude selon la revendication 1, **caractérisé en ce que**
la première section de commande est configurée pour définir une première température de consigne (Tsc1) et une deuxième température de consigne (Tsc3) qui est supérieure à la première température de consigne (Tsc1) sur la base de la température de consigne (Ts), configurée pour définir le fonctionnement du compresseur (2) dans l'état de marche lorsque la température détectée (Ta) du détecteur de température d'air intérieur (51) est inférieure à la deuxième température de consigne (Tsc3), configurée pour définir le fonctionnement du compresseur (2) dans l'état d'arrêt lorsque la température détectée (Ta) du détecteur de température d'air intérieur (51) est supérieure ou égale à la deuxième température de consigne (Tsc3), et configurée pour définir le fonctionnement du compresseur (2) dans l'état de marche lorsque la température détectée (Ta) du détecteur de température d'air intérieur (51) diminue au-dessous de la première température de consigne (Tsc1) après que le fonctionnement du compresseur (2) ait été défini dans l'état d'arrêt.

6. Appareil de chauffage d'eau chaude selon la revendication 5, **caractérisé en ce qu'**il comprend en outre
un capteur de température d'eau de sortie (24) configuré pour détecter une température (Two) de l'eau chaude distribuée dans le radiateur chauffant (40), et **caractérisé en ce que**
la première section de commande est configurée pour commander le fonctionnement du compresseur (2) de façon à amener la température détectée (Two) du capteur de température d'eau de sortie (24) à s'approcher d'une température cible (Tt) lorsque le fonctionnement du compresseur (2) est dans l'état de marche.

7. Appareil de chauffage d'eau chaude selon la revendication 6, **caractérisé en ce qu'**il comprend en outre une section de réglage configurée pour régler la température cible (Tt) sur la base d'une différence entre la température de consigne (Ts) et la température détectée (Ta) du détecteur de température d'air intérieur (51).

8. Appareil de chauffage d'eau chaude selon la revendication 1, **caractérisé en ce que**
la première section de commande est configurée pour définir une température de référence (Tsc) qui est la différence entre la température de consigne (Ts) et une première température prédéterminée (ΔT0) sur la base de la température de consigne (Ts), configurée pour définir une première température de consigne (Tsc1) qui est la somme de la température de référence (Tsc) et une deuxième température prédéterminée (ΔT1), et une deuxième température de consigne (Tsc3) qui est la somme de la température de référence (Tsc) et une troisième température prédéterminée (ΔT3), de sorte que la première température de consigne (Tsc1) soit inférieure à la deuxième température de consigne (Tsc3) sur la base de la température de référence (Tsc), configurée pour définir le fonctionnement du compresseur (2) dans l'état de marche lorsque la température détectée (Ta) du détecteur de température d'air intérieur (51) est inférieure à la deuxième température de consigne (Tsc3), configurée pour définir le fonctionnement du compresseur (2) dans l'état d'arrêt lorsque la température détectée (Ta) du détecteur de température d'air Intérieur (51) est supérieure ou égale à la deuxième température de consigne (Tsc3), et configurée pour définir le fonctionnement du compresseur (2) dans l'état de marche lorsque la température détectée (Ta) du détecteur de température d'air intérieur (51) diminue au-dessous de la première température de consigne (Tsc1) une fois que le fonctionnement du compresseur (2) est défini dans l'état d'arrêt.

9. Appareil de chauffage d'eau chaude selon la revendication 8, **caractérisé en ce qu'**il comprend en outre un capteur de température d'eau de sortie (24) configuré pour détecter une température (Two) de l'eau chaude distribuée dans le radiateur chauffant (40), et **caractérisé en ce que** la première section de commande est configurée pour commander le fonctionnement du compresseur (2) de façon à amener la température détectée (Two) du capteur de température d'eau de sortie (24) à s'approcher d'une température cible (Tt) lorsque le fonctionnement du compresseur (2) est dans l'état de marche.

10. Appareil de chauffage d'eau chaude selon la revendication 9, **caractérisé en ce qu'**il comprend en outre une section de réglage configurée pour régler la température cible (Tt) sur la base d'une différence entre la température de consigne (Ts) et la température détectée (Ta) du détecteur de température d'air intérieur (51).

11. Appareil de chauffage d'eau chaude selon la revendication 10, **caractérisé en ce que**
la section de réglage est configurée pour régler la température cible (Tt) à la hausse d'une certaine quantité à des intervalles de temps réguliers lorsque le fonctionnement du compresseur (2) est dans l'état de marche et si la température détectée (Ta) du détecteur de température d'air Intérieur (51) est inférieure à la température de référence (Tsc), configurée pour maintenir la température cible (Tt) lorsque le fonctionnement du compresseur (2) est dans l'état de marche et si la température détectée (Ta) du détecteur de température d'air intérieur (51) est dans une région de température commençant à la température de référence (Tsc) mais n'atteignant pas la première température de consigne (Tsc1), et configurée pour régler la température cible (Tt) à la baisse d'une certaine quantité à des intervalles de temps réguliers lorsque le fonctionnement du compresseur (2) est dans l'état de marche et si la température détectée (Ta) du détecteur de température d'air intérieur (51) est dans une région de température commençant à la première température de consigne (Tsc1) mais n'atteignant pas la deuxième température de consigne (Tsc3).

12. Appareil de chauffage d'eau chaude selon la revendication 1, **caractérisé en ce que**
le cycle de réfrigération de pompe à chaleur comprend le compresseur (2), une vanne quatre voies (3), le canal d'écoulement de réfrigérant (21a) de l'échangeur de chaleur d'eau (21), une vanne de dilatation (4) et un échangeur de chaleur extérieur (5), fait circuler un réfrigérant évacué depuis le compresseur (2) vers le canal d'écoulement de réfrigérant (21a) de l'échangeur de chaleur d'eau (21) par l'intermédiaire de la vanne quatre voies (3), fait circuler le réfrigérant après avoir traversé le canal d'écoulement de réfrigérant (21a) vers l'échangeur de chaleur extérieure (5) par l'intermédiaire de la vanne de dilatation (4) et la vanne quatre voies (3), et retourne le réfrigérant après avoir traversé l'échangeur de chaleur extérieur (5) vers le compresseur (2).
